# EUROPÄISCHE PATENTANMELDUNG

(11) **EP 1 876 053 A2**
(43) Veröffentlichungstag der Anmeldung: **09.01.2008**
(21) Anmeldenummer: 07009288.7
(22) Anmeldetag: 09.05.2007
(51) Int. Cl.: B60N 2/60

(54) **Fahrgastsitz**

(30) Priorität: 05.07.2006 DE 102006030932
(71) Anmelder: Vogelsitze GmbH, 76228 Karlsruhe (DE)
(72) Erfinder: Vogel, Heiner, 76228 Karlsruhe (DE)
(74) Vertreter: Dimmerling, Heinz

(57) **Zusammenfassung**

Ein Fahrgastsitz für Personenbeförderungsfahrzeuge, insbesondere Busse und Bahnen, mit einer Rückenlehne 1, welche ein mit einer Polsterung 1b versehenes Gestell 1a aufweist, wobei an der Polsterung 1b Paneelen 2 angeordnet sind, welche Befestigungselemente 3 aufweisen, ist dadurch gekennzeichnet, dass an dem Gestell 1a Halteelemente 4 angeordnet sind, mit welchen die an den Paneelen 2 angeordneten Befestigungselemente 3 form- und/oder kraftschlüssig in Eingriff bringbar sind.

## Beschreibung

Die Erfindung betrifft einen Fahrgastsitz nach dem Oberbegriff des Anspruchs 1, für Personenbeförderungsfahrzeuge, insbesondere Busse und Bahnen, mit einer Rückenlehne, welche ein mit einer Polsterung versehenes Gestell aufweist, wobei an der Polsterung Paneelen angeordnet sind, welche Befestigungselemente aufweisen.

Ein derartiger Fahrgastsitz ist im Stand der Technik hinlänglich bekannt und wird von der Patentanmelderin seit vielen Jahren hergestellt und in Verkehr gebracht. Bei dem bekannten Fahrgastsitz sind in der Polsterung so genannte Clipse eingeschäumt, an welchen an den Paneelen angeordnete entsprechend ausgebildete Befestigungselemente befestigt werden können. Werden die Befestigungselemente auf die Clipse aufgeclipst, ist die betreffende Paneele fest an der Polsterung angeordnet.

Wenngleich die Paneele auch fest an der Polsterung angeordnet ist, und die Clipse diesbezüglich ihre Aufgabe einwandfrei erfüllen, so hat sich doch das Verbinden der Befestigungselemente mit den Clipsen als problematisch erwiesen. Denn dadurch, dass die Clipse in der Polsterung eingeschäumt sind, ist ihre Position nicht stabil und kann sich beim Aufclipsen der Befestigungselemente verändern. Insbesondere geben die Clipsen wegen der Elastizität des Schaums beim Aufclipsen der Befestigungselemente nach, so dass sich die Befestigungselemente manchmal nur sehr schwer mit den Clipsen verbinden lassen.

Es ist Aufgabe der Erfindung einen eingangs genannten Fahrgastsitz derart auszubilden, dass sich die Paneelen auf einfache Weise an der Polsterung anordnen lassen.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Fahrgastsitz für Personenbeförderungsfahrzeuge, insbesondere Busse und Bahnen, mit einer Rückenlehne, welche ein mit einer Polsterung versehenes Gestell aufweist, wobei an der Polsterung Paneelen angeordnet sind, welche Befestigungselemente aufweisen, dadurch gekennzeichnet, dass an dem Gestell Halteelemente angeordnet sind, mit welchen die an den Paneelen angeordneten Befestigungselemente form- und/oder kraftschlüssig in Eingriff bringbar sind.

Dadurch, dass an dem Gestell Halteelemente angeordnet sind, mit welchen die an den Paneelen angeordneten Befestigungselemente form- und/oder kraftschlüssig in Eingriff bringbar sind, lassen sich die Befestigungselemente problemlos mit den Halteelementen verbinden. Denn dadurch, dass die Halteelemente fest mit dem Gestell verbunden sind, verändern sie ihre Position nicht. Auch wenn auf die Polsterung Druck ausgeübt wird, bleiben die Halteelemente in ihrer Position.

Hierdurch lassen sich die Befestigungselemente der Paneelen sehr einfach mit den Halteelementen verbinden. Das bisher erforderliche Herausfinden der zur Befestigung erforderlichen Position entfällt vollkommen. Dies hat eine sehr große Zeitersparnis zur Folge, was sich sehr vorteilhaft auf die Herstellungskosten auswirkt.

Besonders vorteilhaft ist eine Ausführungsform der Erfindung, bei der die Halteelemente jeweils einen Steg aufweisen, welcher von einem an den Befestigungselementen ausgebildeten Hinterschnitt umgreifbar ist. Hierdurch lassen sich die Paneelen durch eine Schiebebewegung, mittels welcher die Befestigungselemente von den Hinterschnitten umgriffen werden, an der Polsterung anordnen.

Sehr vorteilhaft bei der letztgenannten Ausführungsform ist es, wenn die Halteelemente laschenförmige Elemente sind, welche eine Ausnehmung aufweisen, deren Rand teilweise den Rand des Stegs bildet. Hierdurch lassen sich Befestigungselemente, welche sich in die Ausnehmungen einbringen lassen, auf einfache Weise in eine zur Befestigung erforderliche Position bringen. Die Befestigungselemente brauchen lediglich in die Ausnehmungen gesteckt werden, woraufhin dann die Schiebebewegung erfolgen kann. Durch die Schiebebewegung hintergreift der Hinterschnitt den Steg, wodurch die Paneele von den Halteelementen gehalten wird.

Sehr vorteilhaft ist es, wenn die Befestigungselemente als Laschen ausgebildet sind, welche jeweils einen Schlitz aufweisen, durch welchen der Hinterschnitt gebildet wird. Ein derartiges Befestigungselement ist sehr zuverlässig und auf sehr einfache Weise herstellbar.

Bei einer weiteren Ausführungsform der Erfindung ist vorgesehen, dass die Paneelen Arretierungselemente aufweisen. Mittels der Arretierungselemente lässt sich die Position einer betreffenden Paneele fixieren, so dass die Paneele keine Schiebebewegung mehr ausführen kann. Es ist somit möglich, die Paneele durch eine Schiebebewegung, durch welche die Befestigungselemente mit den Halteelementen verbunden werden, an der Polsterung anzuordnen. Durch eine anschließende Fixierung mittels der Arretierungselemente lässt sich erreichen, dass die Paneelen in ihrer Position gehalten werden und nicht unbeabsichtigt von der Polsterung entfernt werden können.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:
- Fig. 1: eine Rückenlehne eines erfindungsgemäßen Fahrgastsitzes ohne Polsterung jedoch mit einer Paneele in Explosionsdarstellung,
- Fig. 2: eine Detaildarstellung eines Ausschnitts aus Fig. 1 und
- Fig. 3: einen erfindungsgemäßen Fahrgastsitz mit einer befestigten Paneele und einer Paneele in Explosionsdarstellung.

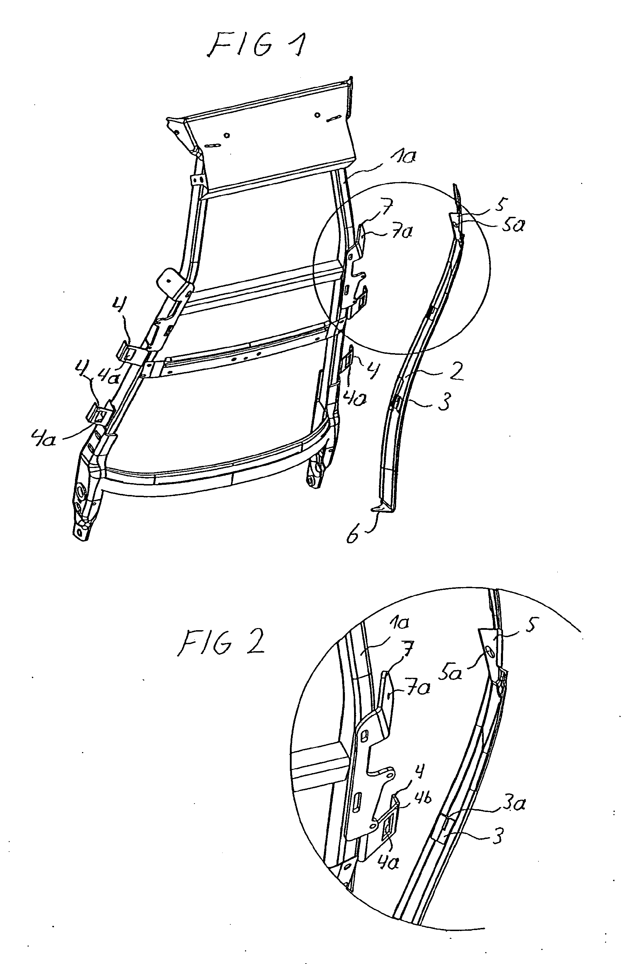

Wie insbesondere Fig. 1 und Fig. 2 entnommen werden kann, sind an einem Gestell 1 a einer Rückenlehne 1 eines Fahrgastsitzes Halteelemente 4 befestigt. Die Halteelemente 4 sind als Blechlaschen ausgebildet und an den Längsstreben des Gestells 1a der Rückenlehne 1 befestigt. Die Halteelemente 4 weisen rechteckförmige Ausnehmungen 4a auf.

Die rechteckförmigen Ausnehmungen 4a der Halteelemente 4 sind so ausgebildet, dass in sie als Blechlaschen ausgebildete Befestigungselemente 3, welche an Paneelen 2, welche mit der Rückenlehne 1 verbunden werden sollen, angeordnet sind, einbringbar sind. Die Befestigungselemente 3 weisen Schlitze 3a auf, welche die durch die Ausnehmungen 4a gebildeten Stege 4b der Halteelemente 4 aufnehmen können.

Die Paneelen 2, von denen in Fig. 1 aus Gründen der Übersichtlichkeit nur eine dargestellt ist, lassen sich dadurch an dem Gestell 1a der Rückenlehne 1 befestigen, dass die Befestigungselemente 3 in die Ausnehmungen 4a der Halteelemente 4 eingebracht werden und die Paneelen 2 anschließend nach oben verschoben werden, wodurch die Stege 4b in die Schlitze 3a gelangen.

Nachdem die Paneelen 2 nach oben verschoben wurden und sich somit die Stege 4b in den Schlitzen 3a befinden, lassen sich die Paneelen 2 mittels als Blechlaschen ausgebildete Arretierungselemente 5, 6 in ihre Position fixieren. Hierzu ist an dem Gestell 1 a eine weitere Lasche 7 befestigt, welche eine Bohrung 7a aufweist. An den Paneelen 2 ist jeweils eine korrespondierende Lasche 5 angeordnet, welche ebenfalls eine Bohrung 5a aufweist. Die Lasche 5 der Paneele 2 lässt sich hierdurch an der Lasche 7 des Gestells 1 a mittels einer Schraube befestigen.

Zur weiteren Befestigung der Paneelen 2 ist an den Paneelen 2 jeweils am unteren Ende eine abgewinkelte Lasche 6 angeordnet. Mittels der Lasche 6 lässt sich die Paneele 2 ebenfalls mit dem Gestell 1a verschrauben.

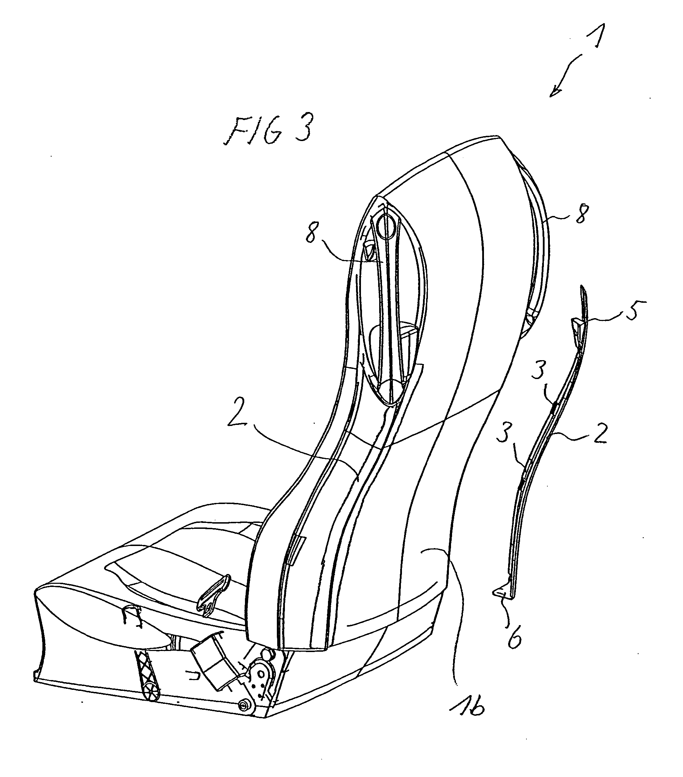

Die Befestigung der Paneelen 2 an dem Gestell 1 a der Rückenlehne 1 geschieht erst dann, wenn auf dem Gestell 1 a die Polsterung 1 b der Rückenlehne 1 aufgebracht ist, wie dies in Fig. 3 dargestellt ist. In Fig. 3 ist eine Paneele 2 bereits an der Rückenlehne 1 angeordnet. Die andere Paneele 2 ist aus Gründen der Übersichtlichkeit in einem Abstand von der Rückenlehne 1 angeordnet. Sie lässt sich dadurch an der Rückenlehne 1 befestigen, dass die Befestigungselemente 3 in die Ausnehmungen 4a der Halteelemente 4, welche in Fig. 3 nicht dargestellt sind, eingebracht werden und die Paneele 2 dann nach oben verschoben wird, wodurch die Stege 4b der Halteelemente 4 in die Schlitze 3a der Befestigungselemente 3 gelangen. Nachdem die Paneele 2 nach oben verschoben wurde, wird sie mittels der Laschen 5, 6 mit der Rückenlehne 1 verschraubt, wodurch sie in ihrer Position fixiert ist.

Die Laschen 7 des Gestells 1 a, an denen die Laschen 5 der Paneelen 2 befestigt werden, dienen auch der Befestigung von Haltegriffen 8, welche nur in Fig. 3 dargestellt sind.

## Patentansprüche

1. Fahrgastsitz für Personenbeförderungsfahrzeuge, insbesondere Busse und Bahnen, mit einer Rückenlehne (1), welche ein mit einer Polsterung (1b) versehenes Gestell (1a) aufweist, wobei an der Polsterung (1b) Paneelen (2) angeordnet sind, welche Befestigungselemente (3) aufweisen,
**dadurch gekennzeichnet,**
**dass** an dem Gestell (1 a) Halteelemente (4) angeordnet sind, mit welchen die an den Paneelen (2) angeordneten Befestigungselemente (3) form- und/oder kraftschlüssig in Eingriff bringbar sind.

2. Fahrgastsitz nach Anspruch 1,
**dadurch gekennzeichnet,**
**dass** die Halteelemente (4) jeweils einen Steg (4b) aufweisen, welcher von an den Befestigungselementen (3) ausgebildeten Hinterschnitten umgreifbar sind.

3. Fahrgastsitz nach Anspruch 2,
**dadurch gekennzeichnet,**
**dass** die Halteelemente (4) laschenförmige Elemente sind, welche eine Ausnehmung (4a) aufweisen.

4. Fahrgastsitz nach Anspruch 2 oder 3,
**dadurch gekennzeichnet,**
**dass** die Befestigungselemente (3) jeweils einen Schlitz (3a) aufweisen, durch welche der Hinterschnitt gebildet wird.

5. Fahrgastsitz nach einem der Ansprüche 1 bis 4,
**dadurch gekennzeichnet,**
**dass** die Paneelen (2) Arretierungselemente (5, 6) aufweisen.
